# EUROPÄISCHE PATENTANMELDUNG

(11) **EP 4 541 738 A1**
(43) Veröffentlichungstag der Anmeldung: **23.04.2025**
(21) Anmeldenummer: 24206459.0
(22) Anmeldetag: 14.10.2024
(51) Int. Cl.: B65G 35/06, B65G 54/02, G01N 35/04

(54) **OBJEKTTRÄGER, FÖRDERSYSTEM UND VERFAHREN ZUM TRANSPORTIEREN**

(30) Priorität: 18.10.2023 DE 102023128625
(71) Anmelder: Groninger GmbH & Co. KG, 91625 Schnelldorf (DE)
(72) Erfinder: Hofmann, Hannes Wilhelm, 74597 Stimpfach-Rechenberg (DE); Rieger, Heiko, 74564 Crailsheim (DE)
(74) Vertreter: Witte, Weller & Partner Patentanwälte mbB

(57) **Zusammenfassung**

Die vorliegende Erfindung betrifft einen Objektträger (10) zum Transportieren zumindest eines Objekts (12), insbesondere eines kosmetischen oder pharmazeutischen Objekts (12), wobei der Objektträger (10) eine Trägerplatte (14) und eine Haftstruktur (16), die auf einer Oberfläche der Trägerplatte (14) angeordnet ist, aufweist, wobei die Haftstruktur (16) eine Auflagefläche (18) zum Tragen und Anhaften bildet. Des Weiteren betrifft die vorliegende Erfindung ein Gebinde, ein Transportsystem und ein Verfahren zum Transportieren einer Vielzahl von Objekten. (Fig. 4)

## Beschreibung

Die vorliegende Erfindung betrifft einen Objektträger mit einer Haftstruktur zum Transportieren zumindest eines Objekts, insbesondere eines kosmetischen oder pharmazeutischen Objekts. Des Weiteren betrifft die Erfindung ein Transportsystem zum Fördern zumindest eines Objektträgers in einer Verarbeitungsstraße. Des Weiteren betrifft die Erfindung ein Verfahren zum Transportieren einer Vielzahl von Objekten, insbesondere kosmetischer oder pharmazeutischer Objekte, mittels des Objektträgers. Des Weiteren betrifft die vorliegende Erfindung ein Gebinde, ein Transportsystem und ein Verfahren zum Transportieren einer Vielzahl von Objekten.

Das Prinzip der Haftstruktur, die molekulare Haftung - auch bekannt als der Gecko-Effekt - ist dem Stand der Technik bereits von Greifer-Anwendungen, insbesondere für Pickand-place Anwendungen bekannt. Entscheidend hierbei ist, dass die Haftung steuerbar reversibel ist.

Die WO 2019/129476 zeigt einen Formkörper mit strukturierter Oberfläche zur reversiblen Adhäsion von Objekten oder an Oberflächen sowie Verfahren zur Ablösung solcher Strukturen. Der Formkörper kann auf einfache Weise wieder von den Objekten oder Oberflächen abgelöst werden.

Die DE 10 2018100 621 A1 betrifft ein Greifverfahren und eine zugehörige Greifvorrichtung zum Greifen eines insbesondere folien- oder membranartigen Objekts, insbesondere einer Batteriefolie, wobei mehrere Greifabschnitte mit jeweils einem freien Ende mit einer Haftstruktur vorgesehen sind, wobei zum Aufnehmen und Halten des Objekts an den Haftstrukturen bei Kontakt mit dem Objekt van-der-Waals-Kräfte bereit gestellt werden, dadurch gekennzeichnet, dass zum Ablegen des Objekts die Haftstrukturen temporären elektrisch geladen werden, so dass die van-der-Waals-Kräfte zwischen den Haftstrukturen verringert oder aufgehoben werden.

Das Prinzip der Haftstruktur, die molekulare Haftung, bzw. der Gecko-Effekt, basiert auf van-der-Waals-Kräften, die zwischen der Haftstruktur und einem anhaftenden Objekt wirken.

Van-der-Waals-Kräfte stellen relativ schwache nicht-kovalenten Wechselwirkungen zwischen Atomen oder Molekülen dar. Kommen sich zwei Atome beziehungsweise Moleküle nahe genug, so ziehen sich die Teilchen insbesondere dann einander an, wenn sich zwei temporäre Dipole treffen. Trifft ein temporärer Dipol auf ein Teilchen ohne Dipolmoment, dann induziert der Dipol in dem Nicht-Dipol ein gleichgerichtetes Dipolmoment, wodurch ebenfalls eine Anziehungskraft zwischen beiden Teilchen entsteht.

Geckos nutzen u.a. diese van-der-Waals-Kräfte, um ohne Klebstoff oder Saugnäpfe an Flächen zu haften. Die Unterseiten ihrer Füße weisen eine große Anzahl feinster Härchen auf. Jedes Härchen kann nur eine kleine Kraft übertragen. Durch die hohe Zahl reicht die Summe der Kräfte dennoch dafür aus, dass das Tier kopfunter an Decken laufen kann. Dies ist auch auf glatten Flächen wie etwa Glas möglich.

Dieses Prinzips kann sich erfindungsgemäß auch bei Transport-Anwendungen mittels eines Transportbehältnisses zum Transport eines, insbesondere kosmetischen oder pharmazeutischen Objekts, z.B. in einer Verarbeitungsstraße, zu Nutze gemacht werden.

Kosmetische oder pharmazeutische Objekte können beispielsweise Flaschen, Vials, Ampullen, Spritzen, oder dergleichen, sein. Eine Verarbeitungsstraße kann unterschiedliche Handhabungssysteme, z.B. Verpackungsmaschinen zum Verpacken der Objekte sowie Vorrichtungsanlagen zum Füllen und Verschließen dieser Objekte, aufweisen.

Zum Transport der Objekte zwischen den einzelnen Handhabungssystemen sind Transportsysteme vorgesehen. Die Transportsysteme können verschiedene Förderer wie beispielsweise Transportbahnen, Bewegungseinrichtungen, Förderbänder, oder dergleichen, aufweisen, durch die die Objekte bewegt werden können.

Insbesondere ist es bekannt, jedes Objekt zumindest während des Transports in einem Transportbehältnis anzuordnen, wobei die Transportsysteme dazu eingerichtet sind, die Transportbehältnisse zu bewegen, um die darin angeordneten Objekte zu transportieren. Diese Transportbehältnisse können auch Becher oder Transportbecher bezeichnet werden. Zum Transport der, insbesondere kosmetischen oder pharmazeutischen, Objekte weisen derartige Transportbehältnisse in der Regel eine Aufnahme auf, in die ein zu transportierendes Objekt eingesetzt werden kann und wodurch die Lage jedes Objekts in dem jeweiligen Transportbehältnis definiert ist.

Meistens können in derartigen Verarbeitungsstraßen verschiedene, insbesondere kosmetische oder pharmazeutische, Objekte verarbeitet werden. Insbesondere wenn die verschiedenen Objekte unterschiedliche Formen aufweisen, werden für die verschiedenen Objekte auch unterschiedliche Transportbehältnisse zum Transport der Objekte benötigt, wobei die Aufnahmen der Transportbehältnisse an die jeweilige Form des zu transportierenden Objekts angepasst sind. Mit anderen Worten ist es erforderlich, für jedes Objekt ein angepasstes Transportbehältnis bereitzustellen.

Vor diesem Hintergrund gibt es aber noch Raum für Verbesserungen, insbesondere hinsichtlich des Transports verschiedener Objekte, der flexiblen Verarbeitung verschiedener Objekte und der Ausgestaltung der Transportbehältnisse.

Es ist daher eine Aufgabe der vorliegenden Erfindung, ein in Bezug flexible Einsatzmöglichkeiten verbessertes Transportbehältnis bereitzustellen.

Gemäß einem ersten Aspekt der vorliegenden Erfindung wird ein Objektträger zum Transportieren zumindest eines Objekts, insbesondere eines kosmetischen oder pharmazeutischen Objekts, bereitgestellt, wobei der Objektträger eine Trägerplatte und eine Haftstruktur, die auf einer Oberfläche der Trägerplatte angeordnet ist, aufweist, wobei die Haftstruktur eine Auflagefläche zum Tragen und Anhaften bildet.

Der Objektträger dient zum Transport des Objekts. Bei dem Objekt kann es sich vorzugsweis um ein kosmetisches oder pharmazeutisches Objekt handeln. Grundsätzlich können aber auch eine Vielzahl anderer Objekte, insbesondere Objekte aus unterschiedlichen Materialien, mittels des Objektträgers transportiert werden. Indem das Objekt von dem Objektträger getragen wird, kann das Objekt mittelbar bewegt werden, in dem der Objektträger bewegt wird. Auf diese Weise lässt sich ein objektschonender Transport realisieren.

Das kosmetische oder pharmazeutische Objekt kann beispielsweise, eine Falsche, ein Behälter, oder allgemein jede Art von Gefäßen für kosmetische oder pharmazeutische Produkte sein. Insbesondere kann es sich dabei um Glasgefäße, wie beispielsweise Vials, Ampullen, oder Spritzen handeln. Grundsätzlich kann das Objekt aber auch ein nicht kosmetisches oder pharmazeutisches Objekt sein. Besonders vorteilhaft ist der Transport mittels des erfindungsgemäßen Objektträgers für Objekte, die einen objektschonenden Transport erfordern.

Die Trägerplatte kann flächig ausgestaltet sein. Die Trägerplatte kann einen vieleckigen, vorzugsweise einen viereckigen, Grundriss haben. Grundsätzlich sind aber auch andere Formen denkbar. Die Trägerplatte kann derart ausgestaltet sein, dass sie eine ausreichende Plattenstärke aufweist, um, insbesondere in Aussparungen in der Platte, weitere Komponenten, beispielsweise elektronische Komponenten, aufzunehmen. Die Trägerplatte kann aber auch ein Boden eines herkömmlichen Transportbehältnisses, beispielsweise einer Wanne, sein. Der Boden des Transportbehältnisses kann in diesem Fall eine Oberfläche darstellen, auf der die Haftstruktur angeordnet sein kann.

Die Trägerplatte kann aus einer Vielzahl unterschiedlicher Werkstoffe hergestellt sein. Es ist besonders vorteilhaft, wenn die Wahl des Werkstoffs auf den Anwendungsfall abgestimmt ist. Z.B. sind bei einer Anwendung im kosmetischen oder pharmazeutischen Bereich Werkstoffe mit einer geringen Abnutzung und einer hohen chemischen Beständigkeit vorteilhaft; bei einer Anwendung z.B. in Verbindung mit einer Transporttechnologie, die die Objektträger in einen magnetisch induzierten Schwebezustand versetzt, um diese zu befördern, kann es vorteilhaft sein, wenn die Trägerplatte selbst aus einem magnetischen oder magnetisierbaren Werkstoff besteht.

Die Trägerplatte stellt eine Oberfläche bereit auf der die Haftstruktur angeordnet werden kann. Die Trägerplatte dient somit als Träger der Haftstruktur. Ist die Haftstruktur auf der Trägerplatte angeordnet kann die Ausgestaltung als einteilig betrachtet werden.

Die Oberfläche Trägerplatte kann vorzugsweise größer sein, als eine projizierte Fläche des zu transportierenden Objekts, sodass das Objekt so auf dem Objektträger positioniert werden kann, dass das Objekt nicht über die Trägerplatte hinausragt. Auf diese Weise kann das Objekt besonders objektschonend transportiert werden, da sich das Objekt innerhalb einer Kontur der Trägerplatte befindet und daher die Wahrscheinlichkeit reduziert wird, dass das Objekt beim Transport gegen ein Hindernis stößt.

Die Trägerplatte kann auch als ein Basiselement des Objektträgers verstanden werden, das einerseits das Tragen des Objekts mittels der Haftstruktur ermöglicht und andererseits mit einer Transporteinrichtung in Wechselwirkung treten kann, damit der Objektträger von der Transportvorrichtung transportiert werden kann.

Die Oberfläche weist in einer ersten Stellung des Objektträgers, in Schwerkraftrichtung nach oben. In der Regel wird der Transport der Objekte in der ersten Stellung des Objektträgers durchgeführt. Grundsätzlich kann der Objektträger auch in einer zweiten Stellung bewegt werden, in der die Oberfläche ausgehend von der ersten Stellung geneigt ist.

Die Haftstruktur ist auf der Oberfläche der Trägerplatte angeordnet und bildet eine Auflagefläche, auf der das zumindest eine Objekt aufliegen kann. In diesem Fall wird das zumindest eine Objekt von der Auflagefläche getragen und haftet an dieser an. Das Objekt kann auch wieder von der Haftstruktur gelöst werden. Somit dient die Haftstruktur insbesondere dem lösbaren Anhaften des Objekts.

Die Haftstruktur kann lösbar an der Trägerplatte befestigt sein. Auf diese Weise kann im Falle einer Beschädigung die Haftstruktur einfach ausgetauscht werden. Außerdem kann die Haftstruktur auf herkömmlichen Trägerplatten nachgerüstet werden, wenn diese eine zur Aufnahme geeignete Oberfläche aufweisen.

Des Weiteren kann vorgesehen sein, dass anstelle des Objekts zumindest ein Adapter auf der Auflagefläche aufliegt und an dieser lösbar anhaftet. Der Adapter kann dazu ausgebildet sein, das Objekt, insbesondere formschlüssig, aufzunehmen. Zur besseren Verständlichkeit werden im Folgenden die Haftmechanismen überwiegend zwischen der Haftstruktur und dem Objekt beschrieben. Es versteht sich von selbst, dass sich das Beschriebene auf den Adapter übertragen lässt.

Durch das Anhaften wird ermöglicht, dass das Objekt - zusätzlich zu der durch das bloße Aufliegen bereitgestellten Normalkraft auf die Auflagefläche und die sich daraus ergebenden kraftschlüssigen Haltemomente - auch durch eine Haftkraft gegen ein Verrutschen oder ungewolltes Lösen von dem Objektträger gesichert wird. Die Haftkraft kann dabei Kraftkomponenten in Normalrichtung oder orthogonal dazu in zumindest eine Querrichtung aufweisen. Das Anhaften ermöglicht somit, dass eine Position des Objekts auf dem Objektträger während des Transports fixiert wird.

Bei der Haftkraft kann es sich um eine Summe von van-der-Waals-Kräften handeln, die rein auf der Wechselwirkung zwischen, insbesondere induzierten, Dipolen beruhen und auf molekularer Basis zwischen der Haftstruktur und dem auf der Haftstruktur liegenden Objekt wirken. Bei der Haftkraft kann es sich des Weiteren um eine Summe von Adhäsionskräften handeln, die insbesondere aus einer Klebeverbindung resultieren. Bei einer Klebeverbindung wird die Haltekraft des Weiteren von den Kohäsionskräften beeinflusst, die innerhalb des Klebstoffs auftreten und zwischen den einzelnen Molekülen des Klebstoffs wirken und dessen strukturelle Integrität bedingen.

Das Anhaften kann durch eine, insbesondere senkrecht auf die Auflagefläche gerichtete, Kraft initiiert werden. Das kann beispielsweise durch ein leichtes Andrücken des Objekts erfolgen. Insbesondere kann es vorteilhaft sein, wenn das Andrücken mit einer kurzen Haltezeit erfolgt, um eine maximale Haftkraft zu bewirken. Das Anhaften kann aber auch durch das Eigengewicht des Objekts initiiert werden.

Das Anhaften ist reversibel. Mit anderen Worten stellt die Haftstruktur eine lösbare Verbindung mit dem Objekt bereit. Das Lösen des Objekts kann durch Einbringen einer kinetischen Energie erfolgen, die relativ zwischen dem Objekt und der Haftstruktur wirkt. Das Lösen kann dann erfolgen, wenn die Haftkraft durch eine äußere Kraft überwunden wird. Es kann vorgesehen sein, die kinetische Energie in Form einer Kraft einzuleiten, die eine Relativbewegung zwischen dem Objekt und der Haftstruktur in eine Richtung normal zu der Auflagefläche oder eine Schubbewegung parallel zu der Auflagefläche bewirkt. Denkbar ist auch eine rotatorische Bewegung. Die Kraft, und entsprechend die resultierende Bewegung, kann auch eine Kombination der zuvor genannten Möglichkeiten sein. Des Weiteren kann vorgesehen sein, die Haftkraft, insbesondere die van-der-Waals-Kräfte, durch eine temporäre elektrische Ladung der Haftstruktur zu verringern oder aufzuhaben.

Zum Lösen mittels einer kinetischen Energie kann die Bewegung des Transportsystems genutzt werden. Beispielsweise kann der Objektträger derart bewegt werden, dass das Objekt mit einem Anlageelement in Anlange gerät, wodurch zumindest eine Bewegung des Objekts in einer Fortbewegungsrichtung des Objektträgers gesperrt wird. Die Fortbewegungsrichtung des Objektträgers kann senkrecht, waagrecht, rotatorisch oder kombiniert aus verschiedenen Bewegungen erfolgen. Hierdurch kann ein Lösen des Objekts ohne eine zusätzliche Aktorik realisiert werden.

Die Haftstruktur kann die Trägerplatte vollständig oder teilweise bedecken. Dabei kann die Haftstruktur an die Form des zu transportierenden Objekts angepasst sein. Es versteht sich von selbst, dass somit auch die Auflagefläche an die Form des Objekts angepasst sein kann. Z.B. kann die Haftstruktur bei einem Objekt mit kreisförmiger Form kreisförmig ausgestaltet sein; oder bei Objekten, die nur in einzelnen Bereichen auf der Auflagefläche aufliegen, kann die Haftstruktur nur in diesen Bereichen ausgestaltet sein. Mit anderen Worten kann die Haftstruktur objektformnah ausgestaltet sein.

Es kann aber auch ein möglichst großer Anteil der Oberfläche der Trägerplatte von der Haftstruktur bedeckt sein. Auf dieser Weise kann eine möglichst große Vielfalt an Objekten mit unterschiedlichen Formen und Größen mittels des Objektträgers transportiert werden. Somit kann eine universelle Aufnahme für Objekte mit unterschiedlichen Formen bereitgestellt werden. Mit anderen Worten kann ein Objektträger mit einer formneutralen Objektschnittstelle bereitgestellt werden.

Die Auflagefläche bildet dort, wo das zumindest eine Objekt von der Auflagefläche getragen wird Kontaktflächen aus. Aus der Summe der Kontaktflächen kann sich eine resultierende Haftkraft ergeben. Es ist vorteilhaft, wenn das Objekt während des Transports vollständig auf der Auflagefläche aufliegen kann. Dann ergibt sich eine möglichst große Kontaktfläche.

Die Position des Objekts auf dem Objektträger kann, insbesondere im Falle eins Objektträgers mit einer formneutralen Objektschnittstelle, in besonders einfacher Weise bereitgestellt werden, da das Objekt nicht in einer passgenauen Aufnahme positioniert werden muss. Somit entspricht die Position des Objekts exakt der Position, in der das Objekt beim Positionieren auf der Auflagefläche fixiert wird.

Da das Objekt auf der Haftstruktur anhaftet ist es spielfrei auf dem Objektträger angeordnet. Auf diese Weise ist die Position des Objekts auf dem Objektträger zu jedem Zeitpunkt unverändert und exakt bestimmt.

Die Haftstruktur kann eine Klebstoffschicht sein. Die Haftstruktur kann eine Folie mit einer Klebstoffschicht oder einem Schaum sein. Die Haftstruktur kann des Weiteren eine strukturierte Oberfläche sein, die die Ausbildung von intermolekularen Kräften, insbesondere van-der-Waals-Kräften, begünstigt.

Durch die flächige und einteilige Ausgestaltung des Objektträgers kann ein universelles Transportbehältnis bereitgestellt werden, das über eine formneutraler Objektschnittstelle verfügt. Mit anderen Worten kann ein Objekt unabhängig von seiner Form transportiert werden. Auf diese Weise können eine große Vielfalt an verschiedenen Objekten mit unterschiedlichen Formen und Größen mittels des Objektträgers transportiert werden, ohne dass eine Komponente des Objektträgers an eine Form der Objekte angepasst werden muss. Dadurch ist es nicht erforderlich, die genaue Form des Objekts zu kennen und eine zeit- und kostenintensive Fertigung von passgenauen Elementen zur formschlüssigen Aufnahme der Objekte kann vermieden werden. Somit kann die Komplexität des Objektträgers reduziert und die Flexibilität der Einsatzmöglichkeiten gesteigert werden. Mit anderen Worten ermöglicht die erfindungsgemäße Ausgestaltung des Objektträgers eine erleichtere Standardisierung des Objektträgers zum Transport unterschiedlicher Objekte.

Gemäß einem zweiten Aspekt der vorliegenden Erfindung wird ein Gebinde bereitgestellt aufweisend den Objektträger nach dem ersten Aspekt und zumindest ein Objekt, insbesondere ein kosmetisches oder pharmazeutisches Objekt, das von der Auflagefläche des Objektträgers getragen wird und an dieser anhaftet.

Indem das Objekt von dem Objektträger getragen wird und an diesem anhaftet, kann das Objekt mittelbar bewegt werden, in dem der Objektträger bewegt wird. Daher muss das Objekt nicht unmittelbar gehandhabt werden. Auf diese Weise lässt sich ein objektschonender Transport realisieren.

Durch den Einsatz der Haftstruktur werden Objekte besser als bisher in ihrer Position bestimmt. Das wird erreicht, indem das Objekt mit der Haftstruktur eine lösbare Verbindung eingeht. Das Gebinde kann somit als eine Einheit verstanden werden, da keine Relativbewegung zwischen dem Objekt und dem Objektträger möglich ist. Anders als bei herkömmlichen Transportbechern, bei denen ein Quasiformschluss zwischen Objekt und der Aufnahme des Bechers das Ziel ist, der aber toleranzbedingt nie erreicht wird, kann es bei der erfindungsgemäßen Ausgestaltung nicht zu Vibrationen in Folge von Mikrostö-βen kommen. Mikrostöße können bei herkömmlichen Transportbechern aufgrund geringster Abweichungen der Formen zwischen dem Objekt und Innenwänden der Aufnahme des Transportbechers insbesondere durch Bewegungsänderungen während des Transports hervorgerufen werden. Der Transport mittels des erfindungsgemäßen Objektträgers ist daher besonders objektschonend.

Des Weiteren können hierdurch auch optimierte Bewegungsprofile mittels des erfindungsgemäßen Objektträgers realisiert werden, da Bewegungseintrag direkt erfolgt und nicht erst nach Überwinden von Passungenauigkeiten bei einem Formschluss. Beispielsweise kann es sich bei optimierten Bewegungsprofilen um eine verbesserte Beschleunigung oder Verzögerung des Objektträgers; oder um eine Bewegungseinstellung, die die Bewegung eines Fluids innerhalb des Objekts berücksichtig und diese ausgleicht, handeln.

Gemäß einem dritten Aspekt der vorliegenden Erfindung wird ein Gebinde bereitgestellt aufweisend den Objektträger nach dem ersten Aspekt; zumindest ein Objekt, insbesondere ein kosmetisches oder pharmazeutisches Objekt; und zumindest einen Adapter, der von der Auflagefläche des Objektträgers getragen wird und an dieser anhaftet, wobei der Adapter das Objekt, insbesondere formschlüssig, aufnimmt.

Durch den Adapter ist es möglich, auch solche Objekte mittels des erfindungsgemäßen Objektträgers zu transportieren, die selbst nicht standfähig sind oder in einer besonderen Orientierung transportiert werden müssen.

Der Adapter weist vorzugsweise einen Standfuß auf, der eine möglichst große Kontaktfläche mit der Haftstruktur realisieren kann. Das Anhaften ist reversibel. Um das Objekt von dem Objektträger zu lösen, kann der Adapter von der Haftstruktur gelöst werden, während das Objekt in dem Adapter aufgenommen ist. Hierdurch wird es ermöglicht, wenn das Objekt von dem Adapter in einem spielfreien Formschluss aufgenommen wird, das Objekt spielfrei mit dem Objektträger zu transportieren, da auch der Adapter spielfrei an dem Objektträger gelagert ist. Es kann aber auch vorgesehen sein, dass das Objekt aus dem Adapter entnommen werden kann, ohne, dass der Adapter von dem Objektträger gelöst werden muss.

Der Adapter kann bei einer geringen Losgröße vorzugsweise mittels eines 3D-Druckverfahrens hergestellt werden. Der Adapter kann auch mittels anderer Herstellungsverfahren, insbesondere Gussverfahren, hergestellt werden.

Gemäß einem vierten Aspekt der vorliegenden Erfindung wird ein Transportsystem mit zumindest einem Objektträger nach dem ersten Aspekt oder mit zumindest einem Gebinde nach dem zweiten oder dritten Aspekt und einem Förderer zum Fördern des zumindest einen Objektträgers oder des zumindest einen Gebindes in einer Verarbeitungsstraße bereitgestellt.

Eine Verarbeitungsstraße kann beispielsweise eine Abfüllanlage, eine Kommissionierungsanlage, eine Verpackungsanlage oder eine Kombination aus diesen sein. Eine Verarbeitungsstraße kann unterschiedliche Verarbeitungsstationen zum Verarbeiten der Objekte aufweisen.

Das Transportsystem kann in eine Verarbeitungsstraße integriert sein, um Objekte, insbesondere kosmetischer oder pharmazeutischer Objekte, mittels des zumindest einen Objektträgers innerhalb der Verarbeitungsstraße zu transportieren. Der Transport kann beispielsweise zwischen den Verarbeitungsstationen erfolgen. Insbesondere kann ein Objekt mittels des Objektträgers einer Verarbeitungsstation zugeführt und von der Verarbeitungsstationen verarbeitet werden, während es von dem Objektträger getragen wird.

Insbesondere kann das Transportsystem unterschiedlich ausgestaltete Objektträger aufweisen. Auf diese Weise kann eine Vielfalt unterschiedlicher Objekte, die mit dem Transportsystem transportiert werden können, vergrößert werden.

Der Förderer dient zum Fördern des zumindest einen Objektträgers. Bei dem Förderer ist eine Vielzahl von Ausführungsformen denkbar. Grundsätzlich können die herkömmlichen Förder-Konzepte als Förderer in dem Transportsystem zum Einsatz kommen. Beispielsweise kann der Förderer ein Linearförderer oder ein Planarförderer sein. Jedes Förder-Konzept kann zudem mit unterschiedlichen Fördertechnologien umgesetzt sein. Denkbar sind beispielsweise Förderbänder, Schienenförderer, Magnetförderbahnen, etc. Es ist auch denkbar, dass der Förderer ein Strecken ungebundenes Transportkonzept, beispielsweise mittels AMRs (Autonome Mobile Roboter), bereitstellt.

Der Förderer kann dazu eingerichtet sein, neben dem Fördern des zumindest einen Objektträgers, weitere Bewegungen des Objektträgers oder Bewegungen des Objekts relativ zum Objektträger bereitzustellen. Beispielsweise kann vorgesehen sein, dass der Objektträger um eine Achse, die lotrecht zu der Auflagefläche angeordnet ist, in dem Förderer rotiert werden kann. Des Weiteren kann vorgesehen sein, den Objektträger in dem Förderer, ausgehend von der ersten Stellung, in die zweiten Stellung zu bewegen, in der die Oberfläche ausgehend von der ersten Stellung geneigt ist. Eine Bewegungen des Objekts relativ zum Objektträger kann insbesondere durch die Bewegung des Objektträgers und eine gleichzeitige Sperrung zumindest einer Bewegung des Objekts bereitgestellt werden. Hierdurch kann ein Lösen des Objekts von dem Objektträger erreicht werden. Bewegungen, insbesondere des Objektträgers, können aber auch dazu genutzt werden, um das Objekt für einen Prozess in einer Verarbeitungsstation auszurichten.

Durch die Verwendung des erfindungsgemäßen Objektträgers, der ein universelles Transportbehältnis darstellt und über eine formneutrale Objektschnittstelle verfügt, kann das Transportsystem eine große Vielfalt an verschiedenen Objekten mit unterschiedlichen Formen und Größen mittels des Objektträgers transportieren, ohne dass das System an eine Form der Objekte angepasst werden muss. Mit anderen Worten können entweder unterschiedliche Objektträger gefördert werden, oder die Objektträger können bei gleicher Ausgestaltung aufgrund der formneutralen Objektschnittstelle unterschiedliche Objekte tragen. Dadurch ist es nicht erforderlich, die genaue Form des Objekts zu kennen und eine zeit- und kostenintensive Fertigung von passgenauen Elementen zur formschlüssigen Aufnahme der Objekte kann vermieden werden. Das System ist daher in Bezug auf eine geringe Losgröße verbessert. Die Komplexität des Objektträgers kann reduziert und die Flexibilität der Einsatzmöglichkeiten des Fertigungssystems gesteigert werden.

Gemäß einem fünften Aspekt der vorliegenden Erfindung wird ein Verfahren zum Transportieren einer Vielzahl von Objekten, insbesondere kosmetischer oder pharmazeutischer Objekte, mittels zumindest eines Objektträgers bereitgestellt, wobei der Objektträger eine Trägerplatte und eine Haftstruktur, die auf einer Oberfläche der Trägerplatte angeordnet ist, aufweist, wobei die Haftstruktur eine Auflagefläche zum Tragen und Anhaften bildet, wobei das Verfahren die folgenden Schritte aufweist:
- Bereitstellen des zumindest einen Objektträgers; und
- Transportieren zumindest eines der Objekte mittels des zumindest einen Objektträgers, insbesondere von einem Startpunkt zu einem Zielpunkt.

Mittels des Verfahrens gemäß dem fünften Aspekt kann insbesondere ein Objektträger nach dem ersten Aspekt und/oder ein Gebinde nach dem zweiten Aspekt und/oder ein Gebinde nach dem dritten Aspekt transportiert werden.

Das Verfahren beginnt mit dem Schritt des Bereitstellens. Hierbei kann der zumindest einen Objektträgers in einer Position bereitgestellt werden, die zum Transport des zumindest einen Objekts geeignet ist. Es kann auch eine Vielzahl von Objektträgern bereitgestellt werden.

Der Schritt des Transportierens erfolgt insbesondere zwischen einem Startpunkt zu einem Zielpunkt.

Bei dem Startpunkt kann es sich um eine erste Station der Verarbeitungsstraße handeln. Bei dem Zielpunkt kann es sich um eine zweite Station der Verarbeitungsstraße handeln. Die erste und die zweite Station können Handhabungseinrichtungen, beispielsweise Abfüll- oder Verpackungseinrichtungen sein.

Es kann vorgesehen sein, dass am Starpunkt das Objekt derart auf den Objektträger abgelegt wird, dass es zu einem Anhaften des Objekts auf der Haftstruktur kommt. Hierzu kann es erforderlich sein, dass das Anhaften durch eine, insbesondere senkrecht auf die Auflagefläche gerichtete, Kraft initiiert wird. Das kann beispielsweise durch ein leichtes Andrücken des Objekts erfolgen.

Bevor das Objekt auf dem Objektträger abgelegt wird, kann ein Schritt des Positionierens erfolgen. Hierbei wird das Objekt in einer genau bestimmten Position auf der Auflagefläche abgelegt und angehaftet.

Es kann vorgesehen sein, dass das Objekt am Zielpunkt von dem Objektträger gelöst wird. Hierzu kann ein Schritt des Lösens zum Freigeben des Objekts vorgesehen sein. Der Schritt des Lösens kann durch kann durch Einbringen einer kinetischen Energie erfolgen, die relativ zwischen dem Objekt und der Haftstruktur wirkt. Der Schritt des Lösens kann durch eine Bewegung des Objektträgers erfolgen, die eine Relativbewegung zwischen dem Objekt und der Haftstruktur in eine Richtung normal zu der Auflagefläche oder eine Schubbewegung parallel zu der Auflagefläche bewirkt. Denkbar ist auch eine rotatorische Bewegung. Hierdurch kann ein Lösen des Objekts ohne eine zusätzliche Aktorik realisiert werden.

Auf diese Weise kann mittels des Verfahrens durch die Verwendung des erfindungsgemäßen Objektträgers, der ein universelles Transportbehältnis darstellt und über eine formneutrale Objektschnittstelle verfügt, eine große Vielfalt an verschiedenen Objekten mit unterschiedlichen Formen und Größen mittels des Objektträgers transportiert werden, ohne dass eine Form der Objekte berücksichtig werden muss. Dadurch ist es nicht erforderlich, die genaue Form des Objekts zu kennen und eine zeit- und kostenintensive Fertigung von passgenauen Elementen zur formschlüssigen Aufnahme der Objekte kann vermieden werden. Das Verfahren ist daher in Bezug auf die "Losgröße eins" verbessert. Somit kann die Flexibilität der Einsatzmöglichkeiten des Verfahrens gesteigert werden.

Die eingangs gestellte Aufgabe wird somit vollumfänglich gelöst.

In einer ersten Ausgestaltung nach dem ersten Aspekt wird ein Fixieren einer Position des Objekts auf der Auflagefläche ausschließlich durch Kraftschluss bereitgestellt.

Die Position des Objekts auf dem Objektträger kann, insbesondere im Falle eins Objektträgers mit einer formneutralen Objektschnittstelle, in besonders einfacher Weise bereitgestellt werden, da das Objekt nicht in einer passgenauen Aufnahme positioniert werden muss. Somit entspricht die Position des Objekts exakt der Position, in der das Objekt beim Positionieren auf der Auflagefläche fixiert wird.

Das Fixieren ermöglicht das Beibehalten der Position des Objekts auf der Auflagefläche. Das Fixieren des Objekts kann in verbesserter Weise bereitgestellt werden, da das Objekt bei einer rein auf Kraftschluss basierend Fixierung eine spielfreie Lagerung des Objekts ermöglicht. Anders als bei formschlüssigen Fixierungen kann es somit nicht zu Stößen zwischen dem Objekt und einer formschlüssigen Aufnahme kommen. Auf diese Weise kann ein Klappern verhindert werden und das Objekt wird objektschonend auf dem Objektträger gelagert.

Ein ausschließlicher Kraftschluss liegt dann vor, wenn das Objekt unmittelbar z.B. aufgrund von van-der-Waals-Kräften in eine Wechselwirkung mit der Haftstruktur tritt, wodurch das Anhaften des Objekts erreicht wird. Des Weiteren kann ein ausschließlicher Kraftschluss dann vorliegen, wenn das Anhaften des Objekts aufgrund von Adhäsionskräften, insbesondere mittelbar, beispielsweise aufgrund einer Klebeverbindung, realisiert wird. Denkbar ist auch eine Kombination daraus. In allen Fällen handelt es sich um eine reversible, bzw. lösbare, Verbindung. Mit anderen Worten

Der Kraftschluss kann die Fixierung des Objekts in eine Schubrichtung, also in eine in eine Richtung parallel zu der Auflagefläche bewirken. Der Kraftschluss kann des Weiteren die Fixierung des Objekts normal zu der Auflagefläche bewirken. Der Kraftschluss kann des Weiteren die Fixierung des Objekts gegen eine Rotation bewirken. Es versteht sich von selbst, dass auch alle Kombinationen denkbar sind.

In einer weiteren Ausgestaltung nach dem ersten Aspekt ist die Haftstruktur eingerichtet, wenn das zumindest eine Objekt von der Auflagefläche getragen wird, van-der-Waals-Kräfte bereitzustellen, die zwischen der Haftstruktur und dem zumindest einen Objekt wirken.

In diesem Fall wird aufgrund von van-der-Waals-Kräften eine Wechselwirkung des Objekts mit der Haftstruktur bereitgestellt, wodurch das Anhaften des Objekts erreicht wird.

Da die Wechselwirkung aufgrund von van-der-Waals-Kräften eine nicht-kovalente Wechselwirkungen zwischen Atomen oder Molekülen des Objekts und der Haftstruktur darstellt, kann ein Anhaften erreicht werden ohne, dass es zu einer chemischen oder anderweitigen, insbesondere magnetischen oder elektromagnetischen, Beeinflussung des Objekts kommt. Auf diese Weise können sensible Objekte, insbesondere kosmetische oder pharmazeutische Objekte, oder elektronische Objekte, besonders objektschonend fixiert und transportiert werden.

In einer weiteren Ausgestaltung nach dem ersten Aspekt ist die Haftstruktur des Weiteren eingerichtet, Adhäsionskräfte bereitzustellen, die zwischen der Haftstruktur und dem zumindest einen Objekt wirken, wobei die Adhäsionskräfte von einer Klebeverbindung bereitgestellt werden.

Die Adhäsionskräfte, die aus einer Klebeverbindung resultieren, können größere Haftkräfte zwischen dem Objekt und der Haftstruktur bereitstellen als Haftkräfte, die rein auf van-der-Waals-Kräfte beruhen. Auf diese Weise lässt sich die Haftkraft verbessern.

Die Klebeverbindung kann mittels einer Klebstoffschicht oder Klebstofffolie bereitgestellt werden. Die Klebeverbindung kann aber auch mittels eines Schaums bereitgestellt werden.

In einer weiteren Ausgestaltung nach dem ersten Aspekt ist die Haftstruktur des Weiteren eingerichtet, van-der-Waals-Kräfte und/oder Adhäsionskräfte bereitzustellen, die zwischen der Haftstruktur und zumindest einem Adapter wirken, wenn der zumindest eine Adapter von der Auflagefläche getragen wird, wobei der Adapter dazu eingerichtet ist, das Objekt, insbesondere formschlüssig, aufzunehmen.

Durch den Adapter ist es möglich, auch solche Objekte mittels des erfindungsgemäßen Objektträgers zu transportieren, die selbst nicht standfähig sind oder in einer besonderen Orientierung transportiert werden müssen.

Der Adapter weist vorzugsweise einen Standfuss auf, der eine möglichst große Kontaktfläche mit der Haftstruktur realisieren kann. Der Adapter kann bei einer geringen Losgröße vorzugsweise mittels eines 3D-Druckverfahrens hergestellt werden. Der Adapter kann auch mittels anderer Herstellungsverfahren, insbesondere Gussverfahren, hergestellt werden.

Grundsätzlich kann der zumindest eine Adapter in gleicher Weise von der Auflagefläche getragen werden und an dieser anhaften, wie das zumindest eine Objekt.

In einer weiteren Ausgestaltung nach dem ersten Aspekt liegen die van-der-Waals-Kräfte in einem Bereich von 0,2 bis 25 N pro cm², bevorzugt 0,2 bis 6 N pro cm².

Auf diese Weise können, abhängig von der Kontaktfläche zwischen Objekt und Haftstruktur und der Materialpaarung, Haftkräfte erreicht werden, die eine ausschließlich auf Kraftschluss basierende Fixierung ermöglichen.

In einer weiteren Ausgestaltung nach dem ersten Aspekt weist die Haftstruktur eine Vielzahl von Vorsprüngen auf.

Die Vorsprünge erstrecken sich in eine Richtung orthogonal zu der Oberfläche der Trägerplatte. Die Vorsprünge bilden eine Struktur der Haftstruktur. Die Vorsprünge können einen kreisförmigen Querschnitt aufweisen. Die Vorsprünge können ein Aspektverhältnis von einer Höhe der Vorsprünge zu einem Durchmesser des Querschnitts von 1 bis 10. Vorzugsweise wird das Aspektverhältnis von 7, bevorzugt 5 nicht überschritten.

Bei der Höhe handelt es sich um die Höhe der Vorsprünge lotrecht zur Oberfläche der Trägerplatte. Die Höhe der Vorsprünge kann in einem Bereich von 1 µm bis 10 mm liegen.

Der Durchmesser des Querschnitts kann über die Höhe variieren. Der mittlere Durchmesser des Querschnitts der Vorsprünge kann in einem Bereich von 0,1 µm bis 5 mm liegen.

Bevorzugt ist die Höhe und der mittlere Durchmesser entsprechend dem bevorzugten Aspektverhältnis angepasst.

Die Vorsprünge sind in einem, insbesondere regelmäßigen, Abstand zwischen Benachbarten der Vorsprünge angeordnet. Der Abstand zwischen zwei Vorsprüngen kann weniger als 2 mm, vorzugsweise weniger als 1 mm betragen. Bevorzugt kann der Abstand in einem Bereich von 10 µm bis 400 µm liegen. Dabei bezeichnet der Abstand die minimale Strecke zwischen zwei Benachbarten der Vorsprünge.

Aufgrund des Aspektverhältnisses können die Vorsprünge durch eine Bewegung derart verformt werden, dass sich die effektive Kontaktfläche zwischen dem Objekt und der Haftstruktur verringert und sich somit auch die van-der-Waals-Kräfte verringern. Dies kann beispielsweise durch eine Schub- oder Rotationsbewegung zwischen dem Objekt und der Haftstruktur erreicht werden. Auf diese Weise kann ein gezieltes Lösen des Objekts von der Haftstruktur erreicht werden.

Die Vorsprünge können aus unterschiedlichen Materialien gefertigt werden. Insbesondere können Elastomere oder Harze und Polymerverbindungen vorteilhaft sein. Die Struktur kann vorzugsweise im Gussverfahren hergestellt werden; aber auch andere Herstellungsverfahren sind denkbar.

In einer weiteren Ausgestaltung nach dem ersten Aspekt weist jeder Vorsprung eine Stirnfläche auf, die von der Trägerplatte abgewandt ist, wobei die Vorsprünge mit den Stirnflächen eine gemeinsame Ebene definieren, die die Auflagefläche bildet.

Die Summe der Stirnflächen, die ein Anhaften des Objekts, das von der Auflagefläche getragen wird, bewirken, bilden die Kontaktfläche. Somit ergibt sich die Haftkraft aus der Summe der Haftkräfte, die zwischen jeder Stirnfläche und dem Objekt wirken.

In einer weiteren Ausgestaltung nach dem ersten Aspekt weisen die Stirnflächen eine strukturierte Oberfläche auf, die dazu eingerichtet ist, eine reversible Adhäsion, insbesondere van-der-Waals-Kräfte bereitzustellen.

Die strukturierte Oberfläche vergrößert die Oberfläche jeder Stirnfläche. Mit einer Vergrößerung der Oberfläche kann eine Verbesserung der bereitgestellten van-der-Waals-Kräfte erreicht werden.

In einer weiteren Ausgestaltung nach dem ersten Aspekt liegen die Adhäsionskräfte der Klebeverbindung in einem Bereich von 2 bis 30 N pro cm², bevorzugt 2 bis 15 N pro cm², besonders bevorzugt 2 bis 6 N pro cm².

Auf diese Weise können, abhängig von der Kontaktfläche zwischen Objekt und Haftstruktur und der Materialpaarung, Haftkräfte erreicht werden, die eine ausschließlich auf Kraftschluss basierende verbesserte Fixierung ermöglichen.

In einer weiteren Ausgestaltung nach dem ersten Aspekt ist die Auflagefläche eben ausgestaltet.

Durch eine ebene Ausgestaltung der Auflagefläche ist der Objektträger besonders einfach zu reinigen. Des Weiteren ermöglicht eine ebene Ausgestaltung eine möglichst große Vielfalt an Objekten mit unterschiedlichen Formen und Größen mittels des Objektträgers zu transportieren.

In einer weiteren Ausgestaltung nach dem ersten Aspekt weist der Objektträger zumindest einen Permanentmagneten auf, und ist dazu eingerichtet, unter Einwirkung eines Magnetfeldes in einen Schwebezustand versetzt und bewegt zu werden, um das Objekt zu transportieren.

Der zumindest eine Permanentmagnet kann innerhalb der Trägerplatte angeordnet sein. Die Trägerplatte selbst kann als Permanentmagnet ausgestaltet sein.

Auf diese Weise kann ein besonders abnutzungsarmes Bewegen des Objektträgers realisiert werden. Das ist insbesondere in Verarbeitungsstraßen mit hohen Hygieneanforderungen vorteilhaft. Des Weiteren kann der Verschleiß des Objektträgers und somit der Wartungsaufwand reduziert werde. Hieraus ergibt sich zudem eine höhere Einsatzzeit des Objektträgers.

Mittels des zumindest einen Permanentmagneten kann der Objektträger durch eine Magnetschwebeeinrichtung bewegt werden. Beispielsweise kann der Objektträger entlang einer Magnetschwebebahn oder frei beweglich auf einer Magnetschwebefläche bewegt werden.

Die Magnetschwebeeinrichtung kann dazu eine Vielzahl von Kachelelementen aufweisen, die als Antrieb für die Magnetschwebebahn oder die Magnetschwebefläche dienen. Die Kachelelemente können dazu eingerichtet sein, eingespeiste Energie in ein geregeltes, elektromagnetisches Feld umzuwandeln, mit dem die Objektträger bewegt werden können. Die Kachelelemente können aneinander anliegend frei angeordnet werden, um Magnetschwebebahn oder die Magnetschwebefläche zu bilden. Beispielsweise können quadratische, rechteckige, L-förmige oder ringförmige Magnetschwebeeinrichtung bereitgestellt werden.

In einer weiteren Ausgestaltung nach dem ersten Aspekt ist der Objektträger dazu eingerichtet, mit einem Förderer, insbesondere einem Schienen basierten Linearförderer, koppelbar zu sein, um die Objekte innerhalb des Förderers, insbesondere entlang einer Förderstrecke des Linearförderers, zu transportieren.

Der Objektträger kann mit dem Förderer bewegungsgekoppelt sein. Das bedeutet, dass die Bewegung des Objektträgers z.B. entlang einer Schiene erfolgt. Dabei kann der Objektträger, insbesondere mittels Formschluss an der Schiene geführt werden. Des Weiteren kann der Objektträger mit einem Antriebselement des Förderers gekoppelt sein, das die Bewegung des Objektträgers bewirkt.

In einer ersten Ausgestaltung nach dem vierten Aspekt weist das Transportsystem des Weiteren zumindest eine Förderstrecke auf, entlang der der zumindest eine Objektträger, insbesondere automatisiert, bewegt werden kann.

Die Förderstrecke kann durch einen Verlauf einer Schiene definiert werden. Die Förderstrecke kann aber auch durch ein sich bewegendes Magnetfeld auf einer dazu eingerichteten Fläche definiert sein, wobei das Magnetfeld dazu eingerichtet ist, einen Objektträger mit zumindest einem Permanentmagneten in einen Schwebezustand zu versetzen und diesen schwebend zu bewegen. Die Förderstrecke kann gradlinig sein. Es versteht sich aber von selbst, dass die Förderstrecke zumindest abschnittsweise auch kurvig ausgebildet sein kann. Grundsätzlich ist es auch möglich, dass eine Förderstrecke in mehr als eine Richtung befahrbar ist. Des Weiteren ist es denkbar, dass sich eine Mehrzahl von Förderstrecken kreuzen oder tangieren.

In einer weiteren Ausgestaltung nach dem vierten Aspekt ist der der Förderer ein Linearförderer oder ein Planarförderer.

Der Linearförderer kann ein schienengeführter Förderer sein. Die Objektträger können sich entlang der Schiene, insbesondere formschlüssig geführt, bewegen. Die Bewegung entlang der Schiene kann in vordefinierten Abständen erfolgen. Es kann aber auch vorgesehen sein, die Bewegung jedes Objektträgers entlang der Schiene individuell zu steuern. Der Linearförderer kann auch ein Förderband sein. Grundsätzlich werden die Objektträger in einem Linearförderer nacheinander entlang derselben Bahn transportiert.

Der Planarförderer stellt eine Bewegungsführung der Objektträger auf einer zweidimensionalen Fläche breit, die auch als Transportfläche bezeichnet werden kann. Insbesondere werden die Objektträger in einem magnetischen Schwebezustand in dem Planarförderer gefördert, wobei sich die Objektträger über die Transportfläche hinwegbewegen. Dabei kann die Bewegung der Objektträger bis zu sechs Freiheitsgrade aufweisen. Des Weiteren kann vorgesehen sein, dass jeder Objektträger in dem Planarförderer individuell bewegt wird. Die Objektträger werden somit nicht zwangsläufig nacheinander entlang derselben Bahn transportiert. Auf diese Weise kann es beispielsweise ermöglicht werden, dass sich Objektträger gegenseitig überholen können. Insbesondere kann eine Geschwindigkeit und eine Beschleunigung individuell bereitgestellt werden. Außerdem wird eine flexible Bewegungsführung der Objektträger ermöglich. Mit anderen Worten kann ein Planarförderer eine veränderliche Förderstrecke bereitstellen.

In einer weiteren Ausgestaltung nach dem vierten Aspekt weist das Transportsystem des Weiteren eine Steuereinheit auf, die dazu eingerichtet ist, eine Bewegung jedes Objektträgers derart zu steuern, dass das Anhaften der Objekte an der Auflagefläche gelöst wird, insbesondere wobei die Bewegung eine Rotationsbewegung des Objektträgers ist.

Die Steuereinheit kann eine Bewegung jedes Objektträgers derart steuern, dass jeder Objektträger automatisiert entlang der Förderstecke bewegt wird. Die Steuereinheit kann des Weiteren dazu eingerichtet sein, die Bewegung jedes Objektträgers in Bezug auf Richtung und Geschwindigkeit zu variieren, sodass sich eine veränderliche Förderstrecke ergibt.

Die Steuereinheit kann des Weiteren dazu eingerichtet sein, das Objekt derart zu bewegen, dass es zu einer Relativbewegung zwischen dem Objekt und der Haftstruktur kommt. Die Relativbewegung kann eine Bewegung in eine Richtung normal zu der Auflagefläche oder eine Schubbewegung parallel zu der Auflagefläche darstellen. Denkbar ist auch eine rotatorische Bewegung. Es versteht sich von selbst, dass die Relativbewegung auch eine kombinierte Bewegung sein kann. Insbesondere kann vorgesehen sein, dass dabei das Objekt mit einem Anlageelement in Anlange gerät, wodurch zumindest eine Bewegung des Objekts in einer Fortbewegungsrichtung des Objektträgers gesperrt wird.

Insbesondere kann durch die Relativbewegung, aufgrund des Aspektverhältnisses der Vorsprünge, die Vorsprünge der Haftstruktur derart verformt werden, dass sich die Kontaktfläche zwischen dem Objekt und der Haftstruktur verringert und sich somit auch die van-der-Waals-Kräfte verringern.

Auf diese Weise kann die Haftkraft leichter überwunden werden, um das Objekt freizugeben. Vorteilhaft hieran ist, dass dies durch die Bewegung des Transportsystems ermöglicht wird, ohne auf ein zusätzliches Greif- oder Handhabungssystem zurückgreifen zu müssen.

In einer ersten Ausgestaltung nach dem fünften Aspekt trägt jeder Objektträger zumindest ein Objekt auf der Auflagefläche angehaftet.

Dadurch, dass das Objekt an dem Objektträger anhaftet und somit spielfrei mit diesem verbunden ist, wird ein besonders objektschonender Transport ermöglicht.

In einer weiteren Ausgestaltung nach dem fünften Aspekt trägt jeder Objektträger zumindest einen Adapter auf der Auflagefläche angehaftet, wobei der Adapter ein Objekt, insbesondere formschlüssig, aufnimmt.

Mittels des Adapters können mit dem Verfahren auch solche Objekte mittels des erfindungsgemäßen Objektträgers transportiert werden, die selbst nicht standfähig sind oder in einer besonderen Orientierung transportiert werden müssen.

In einer weiteren Ausgestaltung nach dem fünften Aspekt wird das Verfahren in dem Transportsystem nach dem vierten Aspekt durchgeführt, wobei der Schritt des Breitstellens ein Bereitstellen in dem Förderer ist und der Schritt des Transportierens mittels des Förderers durchgeführt wird.

In einer weiteren Ausgestaltung nach dem fünften Aspekt weist das Verfahren des Weiteren einen Schritt des Bewegens des zumindest einen Objektträgers auf, wobei das Bewegen jedes Objektträgers derart gesteuert wird, dass das Anhaften der Objekte an der Auflagefläche gelöst wird, insbesondere wobei die Bewegung eine Rotationsbewegung des Objektträgers ist.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine isometrische Ansicht einer ersten möglichen Ausführungsform eines herkömmlichen Transportbechers mit dem Objekt.
- Fig. 2: eine isometrische Ansicht - jeweils oben eine Darstellung ohne das Objekt; jeweils unten eine Darstellung mit dem Objekt: 2A) des herkömmlichen Transportbechers aus Fig. 1; 2B) einer ersten Ausführungsform des erfindungsgemäßen Objektträgers; 2C) des Objektträgers aus Fig. 2B, aber mit einem anderen Objekt;
- Fig. 3: eine isometrische Ansicht einer zweiten Ausführungsform des;
- Fig. 4: eine isometrische Ansicht einer ersten Ausführungsform des Gebindes mit dem Objektträger aus Fig. 3;
- Fig. 5: eine isometrische Ansicht einer dritten Ausführungsform des Objektträgers (außerdem dargestellt ist ein Adapter und ein Objekt);
- Fig. 6: eine isometrische Ansicht einer zweiten Ausführungsform des Gebindes mit dem Objektträger, dem Adapter und dem Objekt aus Fig. 5;
- Fig. 7: eine schematische Ansicht einer ersten Ausführungsform des Transportsystems mit dem Gebinde aus Fig. 4;
- Fig. 8: eine schematische Draufsicht einer zweiten Ausführungsform des Transportsystems;
- Fig. 9: eine schematische Draufsicht einer dritten Ausführungsform des Transportsystems;
- Fig. 10: eine isometrische Draufsicht: 10A) einer vierten Ausführungsform des Objektträgers; 10B) einer fünften Ausführungsform des Objektträgers; und
- Fig. 11: eine schematische Ansicht einer Ausführungsform des Verfahrens zum Transportieren einer Vielzahl von Objekten.

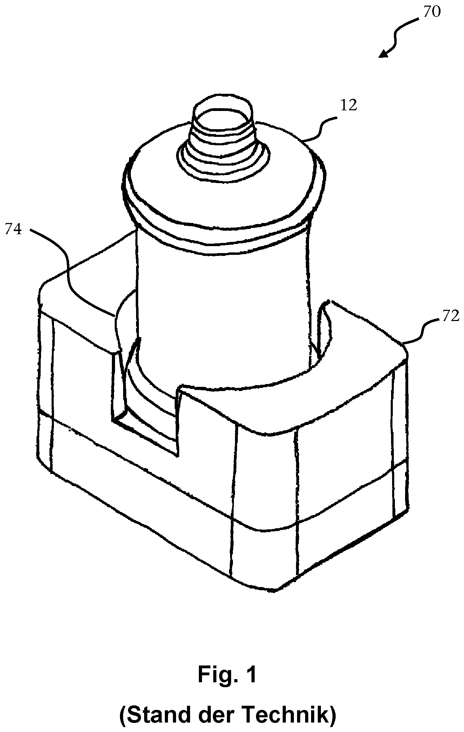

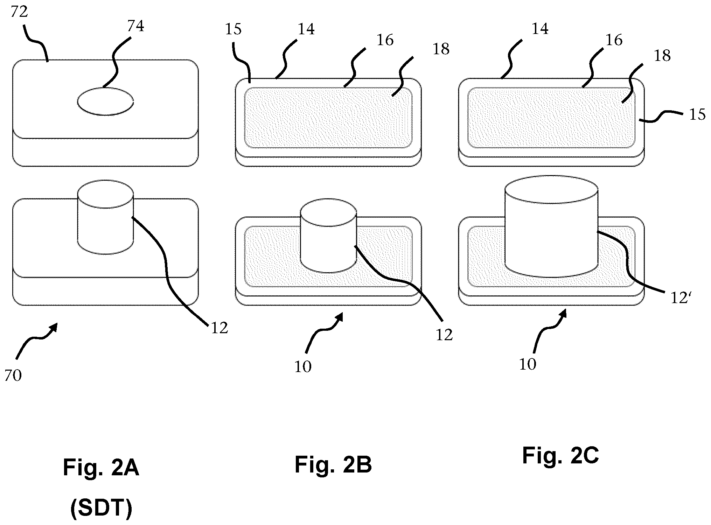

Die Fig. 1 und 2A zeigen eine mögliche Ausführungsform eines herkömmlichen Transportbechers 72, der dem Stand der Technik bekannt ist.

Fig. 1 zeigt den Transportbecher 72 im Detail. Der Transportbecher 72 dient zum Transport eines Objekts 12, beispielsweise eines kosmetischen oder pharmazeutischen Objekts 12. Das Objekt weist eine zylindrische Außenkontur auf.

Der Transportbecher 72 weist eine Aufnahme 74 auf. Die Aufnahme 74 dient zum Aufnehmen des Objekts 12. Die Aufnahme 74 weist eine Innenkontur auf, die weitestgehend der Außenkontur des Objekts 12 entspricht, um einen Quasiformschluss zu bilden. Vorliegend ist die die Aufnahme 74 daher weitestgehend zylindrisch ausgestaltet. Zwischen der Innenkontur der Aufnahme 74 und der Außenkontur des Objekts 12 ist ein Spalt. Der Spalt ist dazu ausgebildet, das Objekt 12 in die Aufnahme 74 einzuführen und aus der Ausnahme 74 zu entnehmen. Der Spalt dient des Weiteren dazu, Fertigungstoleranzen auszugleichen.

Ist das Objekt 12 in der Aufnahme 74 des Transportbechers 72 aufgenommen, kann das Objekt 12 mit dem Transportbecher 72 transportiert werden. Die Zusammenstellung aus Transportbecher 72 und Objekt 12, das sich in der Aufnahme 74 befindet, kann auch als Gebinde 70 bezeichnet werden.

Die Fig. 2A bis 2C veranschaulichen Unterschiede zwischen dem Stand der Technik (in Fig. 2A gezeigt) und der Erfindung (in Fig. 2B, 2C gezeigt).

Fig. 2A (oben) zeigt eine schematische Darstellung der Ausführungsform des Transportbechers 72 aus Fig. 1. Die zylindrische Aufnahme 74 ist leer. In Fig. 2A (unten) befindet sich das Objekt 12 in der Aufnahme 74. Das Objekt 12 wird in der Aufnahme 74 mit einem Quasiformschluss gehalten. Das Objekt 12 kann in diesem Zustand mittels des Transportbechers 72 transportiert werden.

Fig. 2B (oben) zeigt eine erste Ausführungsform des erfindungsgemäßen Objektträgers 10. Der Objektträger 10 dient zum Transportieren zumindest eines kosmetischen oder pharmazeutischen Objekts 12. Der Objektträger 10 trägt kein Objekt 12. Der Objektträger 10 weist eine rechteckige Trägerplatte 14 und eine Haftstruktur 16, die auf einer Oberfläche der Trägerplatte 14 angeordnet ist, auf. Die Haftstruktur 16 erstreckt sich nur teilweise über die Trägerplatte, sodass ein umlaufender Rand 15 definiert wird. Die Haftstruktur 16 bildet eine Auflagefläche 18 zum Tragen und Anhaften. Mit anderen Worten kann die Auflagefläche 18 eine Aufnahme zum Aufnehmen des Objekts 12 sein.

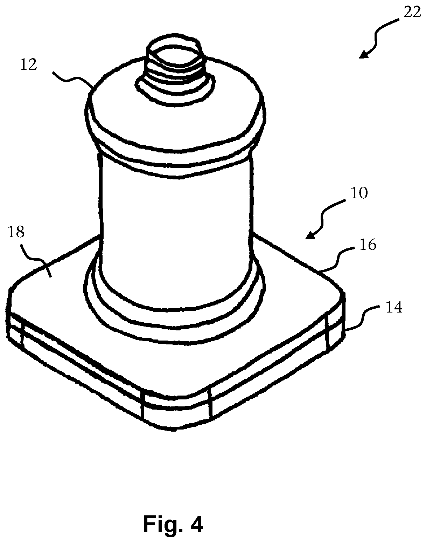

In Fig. 2B (unten) trägt die Auflagefläche 18 das Objekt 12. Das Objekt 12 haftet an der Auflagefläche 18 an. Das Objekt 12 kann auf einer beliebigen Position auf der Auflagefläche 18 positioniert werden und auf dieser Position an der Auflagefläche anhaften. Es ist zu erkennen, dass das Objekt 12 an verschiedenen Positionen auf der Auflagefläche 18 positioniert werden kann, oder dass eine Mehrzahl der Objekte 12 auf der Auflagefläche 18 positioniert werden können. Mit anderen Worten kann das Objekt 12 flexibel auf der Auflagefläche 18 positioniert werden. Auf diese Weise kann der Objektträger 10 das Objekt 12 aufnehmen. Das Objekt 12 kann in diesem Zustand mittels des Objektträgers 10 transportiert werden. Der Objektträger 10 mit einem Objekt 12 kann auch als Gebinde bezeichnet werden (siehe auch Gebinde 22 in Fig. 4).

Fig. 2C (oben) zeigt den Objektträger 10 aus Fig. 2B (oben). In Fig. 2C (unten) trägt die Auflagefläche 18 ein zweites Objekt 12`. Das Objekt 12` haftet an der Auflagefläche 18 an. Das zweite Objekt 12' ist größer, als das Objekt 12 aus Fig. 2B. Es ist zu erkennen, dass Objekte mit verschiedenen Größen an beliebigen Positionen auf der Auflagefläche von dem Objektträger getragen werden können. Es ist des Weiteren zu erkennen, dass auch Objekte 12 mit abweichenden Formen, beispielsweise quadratischen Formen, von auf der Auflagefläche positioniert werden könnten. Der Objektträger weist somit eine formneutrale Objektschnittstelle auf. Mit anderen Worten weist der Objektträger 12 eine universelle, bzw. formneutrale, Aufnahme für verschiedene Objekte 12 auf.

Im Unterschied zu dem Transportbecher 72 aus Fig. 2A kann der Objektträger 10 demnach flexibel eingesetzt werden. Mit anderen Worten stellt der Objektträger 10 im Unterschied zu dem Transportbecher 72 aus Fig. 2A ein universelles, bzw. formneutrales, Transportbehältnis dar.

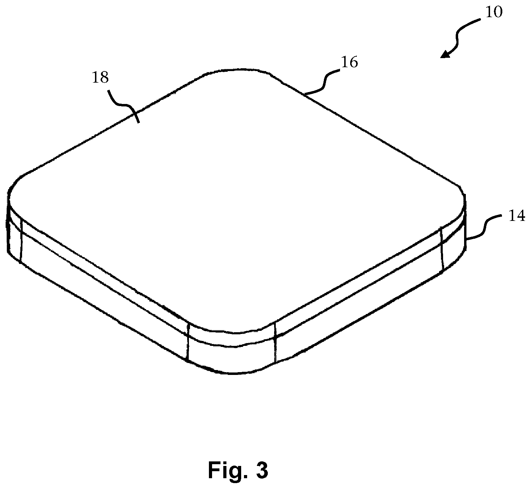

Fig. 3 zeigt eine zweite Ausführungsform des Objektträgers 10. Der Objektträger 10 hat einen ähnlichen Aufbau, wie der Objektträger der Fig. 2B und 2C.

Der Objektträger 10 dient zum Transportieren zumindest eines Objekts 12, insbesondere eines kosmetischen oder pharmazeutischen Objekts 12. Der Objektträger 10 weist eine Trägerplatte 14 und eine Haftstruktur 16, die auf einer Oberfläche der Trägerplatte 14 angeordnet ist, auf. Die Haftstruktur 16 bildet eine Auflagefläche 18 zum Tragen und Anhaften.

Die Trägerplatte 14 ist flächig und quadratisch ausgestaltet. Die Trägerplatte 14 besteht beispielhaft aus einem magnetischen Material, damit der Objektträger 10 mittels einer Magnetschwebeeinrichtung eines Förderers einer Verarbeitungsstraße in einen Schwebezustand versetzt werden und schwebend von dem Förderer gefördert werden kann. Alternativ kann zumindest ein Permanentmagnet in der Trägerplatte angeordnet sein. Die Trägerplatte 14 kann aber auch aus einem anderen Material gefertigt sein und beispielsweise mittels eines Förderbandes gefördert werden.

Die Haftstruktur 16 erstreckt sich über die gesamte Oberfläche der Trägerplatte 14. Auf diese Weise bildet die Haftstruktur 16 eine möglichst große Auflagefläche 18 aus. In manchen Anwendungsfällen kann es aber auch vorteilhaft sein, dass die Haftstruktur 18 nur teilweise die Trägerplatte 14 bedeckt.

Die Haftstruktur 16 in Fig. 3 ist eine strukturierte Oberfläche, die die Ausbildung von intermolekularen Kräften, insbesondere van-der-Waals-Kräften, begünstigt. Die Haftstruktur weist als Strukturierung eine Vielzahl von Vorsprüngen auf (nicht dargestellt). Die Vorsprünge in dem Beispiel der Fig. 3 weisen einen kreisförmigen Querschnitt auf.

Beispielsweise weisen die Vorsprünge einen Durchmesser von 10 µm bis 100 µm auf, bei einer lotrechten Höhe von 20 µm bis 500 µm, wobei das Aspektverhältnis 7, bevorzugt 5, nicht überschreitet. Die Vorsprünge sind in einem regelmäßigen Abstand zwischen Benachbarten der Vorsprünge angeordnet. Der Abstand zwischen zwei Vorsprüngen in Fig. 3 beträgt weniger als 2 mm.

Jeder Vorsprung weist eine Stirnfläche auf, die von der Trägerplatte 14 abgewandt ist, wobei die Vorsprünge mit den Stirnflächen eine gemeinsame Ebene definieren, die die Auflagefläche 18 bildet.

Die van-der-Waals-Kräfte, die durch die Haftstruktur 16 bereitgestellt werden, wirken die zwischen der Haftstruktur 16 und dem zumindest einen Objekt 12. Durch die van-der-Waals-Kräfte wird das Anhaften des Objekts 12 an der Auflagefläche 18 bewirkt. Die Haftstruktur 16 kann alternativ aber auch eine Klebefläche sein. Die Klebefläche kann eine Klebstoffschicht aufweisen. In diesem Fall wird das Anhaften des Objekts 12 an der Auflagefläche 18 aufgrund einer Klebstoffverbindung bewirkt, die insbesondere Adhäsionskräfte bereitstellt.

Fig. 4 zeigt eine erste Ausführungsform des Gebindes 22. Das Gebinde 22 weist den Objektträger 10 der Fig. 3 auf und zumindest ein Objekt 12, insbesondere ein kosmetisches oder pharmazeutisches Objekt 12. Das Objekt 12 wird von der Auflagefläche 18 des Objektträgers 10 getragen und haftet an dieser an. Das Anhaften ist reversibel. Mit anderen Worten ist das Objekt 12 spielfrei mit dem Objektträger lösbar verbunden.

Es ist zu erkennen, dass die Oberfläche Trägerplatte größer ist, als eine projizierte Fläche des Objekts 12, sodass das Objekt 12 so auf dem Objektträger 10 positioniert werden kann, dass das Objekt 12 nicht über die Trägerplatte 14 hinausragt.

Indem das Objekt 12 von dem Objektträger 10 getragen wird und an diesem anhaftet, kann das Objekt 12 mittelbar bewegt werden, in dem der Objektträger 10 bewegt wird. Daher muss das Objekt 12 nicht unmittelbar gehandhabt werden.

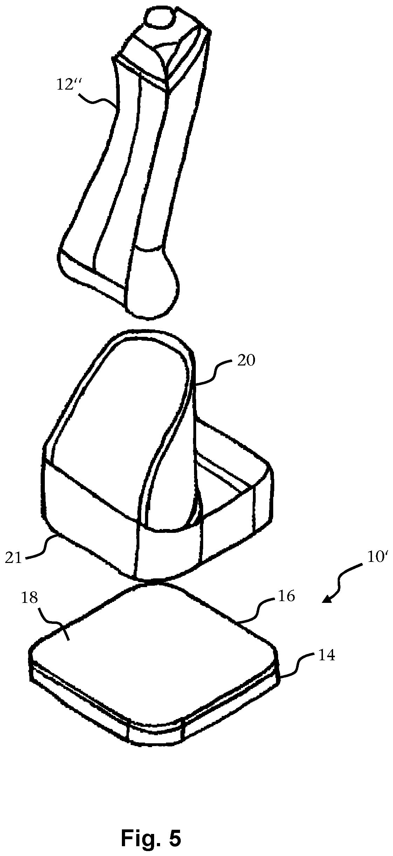

Fig. 5 zeigt eine dritte Ausführungsform des Objektträgers 10. Des Weiteren ist ein Objekt 12" und ein Adapter 20 dargestellt, um zu veranschaulichen, das Objekt 12" von dem Objektträger 10 getragen werden kann.

Das Objekt 12" ist ein Objekt, das nicht standfähig ist. Das bedeutet, dass es nicht selbstständig in der erforderlichen Position positioniert werden kann. Vorliegend ist das der Fall, da das Objekt 12" eine Rundung aufweist. Um das Objekt 12" dennoch in der erforderlichen Position positionieren zu können, wird das Objekt 12" in dem Adapter 20 positioniert.

Der Adapter 20 ist ausgebildet, das Objekt 12" formschlüssig aufzunehmen. Des Weiteren weist der Adapter einen Standfuß 21 auf, der eine große Kontaktfläche mit der Haftstruktur 16 ermöglicht.

Der Objektträger 10 gemäß Fig. 5 entspricht weitestgehend dem Objektträger 10 aus Fig. 3. Jedoch ist die Haftstruktur 16 eingerichtet, van-der-Waals-Kräfte und bereitzustellen, die zwischen der Haftstruktur 16 und dem Adapter 20 wirken, wenn der Adapter 20 von der Auflagefläche 18 getragen wird, sodass der Adapter 20 an dem Objektträger anhaften kann. Es versteht sich von selbst, dass die Haftstruktur 16 auch eingerichtet sein kann, Adhäsionskräfte bereitzustellen, die zwischen der Haftstruktur 16 und dem Adapter 20 wirken.

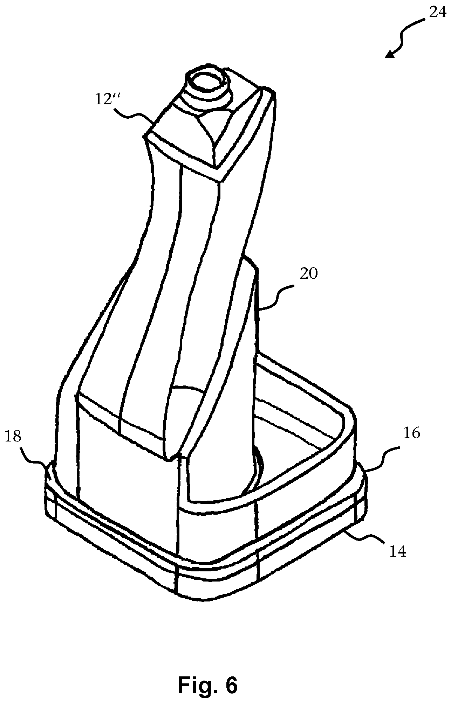

Wird der Adapter 20 in Fig. 5 auf den Objektträger 10 positioniert und das Objekt 12" in dem Adapter 20 aufgenommen, kann das Objekt 12" mittels des Objektträgers 10 transportiert werden (nachfolgend in Fig. 6 gezeigt).

Fig. 6 zeigt eine zweite Ausführungsform des Gebindes 24 mit dem Objektträger 10, dem Adapter 20 und dem Objekt 12" aus Fig. 5. Fig. 5 kann als eine Explosionsdarstellung des Gebindes 24 betrachtet werden.

Der Adapter 20 wird von der Auflagefläche 18 des Objektträgers 10 getragen und haftet an dieser an. Dabei nimmt der Adapter 20 das Objekt 12" formschlüssig auf. Der Adapter 20 kann in der gleichen Weise an dem Objektträger 10 anhaften, wie das Objekt 12 in Fig. 4. Das Anhaften ist reversibel. Um das Objekt 12" von dem Objektträger 10 zu lösen, kann der Adapter 20 von der Haftstruktur 16 gelöst werden, während das Objekt 12" in dem Adapter 20 aufgenommen ist. Es kann aber auch vorgesehen sein, dass das Objekt 12" aus dem Adapter 20 entnommen werden kann, ohne, dass der Adapter 20 von dem Objektträger 10 gelöst werden muss.

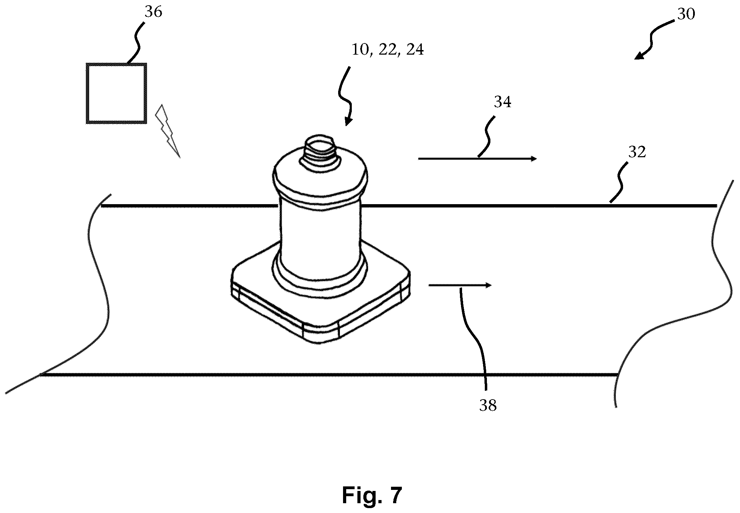

Die Figuren 7 bis 9 zeigt unterschiedliche Ausführungsformen eines Transportsystems 30. Das Transportsystem 30 kann in einer Verarbeitungsstraße 40 angeordnet sein. In jedem Transportsystem 30 kann zumindest ein Objektträger 10 oder ein Gebinde 22, 24 transportiert werden, um das zumindest eine Objekt 12, 12`, 12" zu transportieren. Es versteht sich von selbst, dass auch andere Objekte mit dem Transportsystem 30 transportiert werden können.

Fig. 7 zeigt eine erste Ausführungsformen des Transportsystems 30. Das Transportsystem 30 weist eine Vielzahl der Gebinde 22 (nur eines ist dargestellt) aus Fig. 4 und einen Förderer 32 zum Fördern der Gebinde 22 auf.

Das Transportsystem 30 weist des Weiteren eine Förderstrecke (beispielhaft dargestellt mittels des Richtungspfeils 34) auf, entlang der jedes Gebinde 22 automatisiert bewegt werden kann. Die Förderstrecke 34 kann beispielsweise zwischen zwei Bereichen oder Stationen der Verarbeitungsstraße 40 liegen, oder diese verbinden, um die Gebinde 22 von der einen in die andere zu transportieren. Die Förderstrecke 34 in Fig. 7 ist gradlinig. Es versteht sich aber von selbst, dass die Förderstrecke 34 zumindest abschnittsweise auch kurvig ausgebildet sein kann.

Der Förderer 32 ist in dem Beispiel in Fig. 7 eine Magnetförderbahn 32. Der Objektträger 10 kann mittels der Magnetförderbahn 32 schwebend entlang der Förderstrecke 34 bewegt werden. Des Weiteren kann vorgesehen sein, dass der Objektträger 10 um eine Achse, die lotrecht zu der Auflagefläche 18 angeordnet ist, in dem Förderer 32 rotiert werden kann.

Das Transportsystem 30 weist außerdem eine Steuereinheit 36 auf. Die Steuereinheit kann eine Bewegung 38 jedes Gebindes 22 derart steuern, dass jedes Gebinde 22 automatisiert entlang der Förderstecke 34 bewegt wird.

Die Steuereinheit 36 kann außerdem dazu eingerichtet sein, eine Bewegung jedes Gebindes 22 derart zu steuern, dass das Anhaften des Objekts 12 an der Auflagefläche 18 gelöst wird. Die Bewegung kann beispielsweise eine Rotationsbewegung des Objektträgers 10 sein.

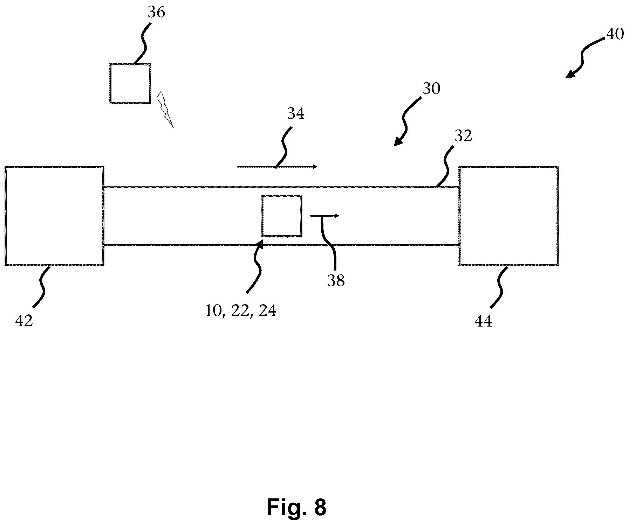

Fig. 8 zeigt eine Draufsicht einer zweiten Ausführungsform des Transportsystems 30. Das Transportsystem 30 in Fig. 8 weist eine Vielzahl von Gebinden 22 (nur eines ist dargestellt) und einen Förderer 32 zum Fördern der Gebinde 22 auf.

Die Förderstrecke (auch hier dargestellt mittels des Richtungspfeils 34) verläuft gradlinig zwischen einer ersten Station 42 und einer zweiten Station 44 der Verarbeitungsstraße 40.

Die erste Station 42 und die zweite Station 44 können Handhabungseinrichtungen oder Verarbeitungsstationen sein. Beispielhaft kann die erste Station 42 eine Abfüllvorrichtung zum Befüllen der Objekte 12, insbesondere mit kosmetischen oder pharmazeutischen Produkten, und zum anschließenden Verschließen der Objekte 12 sein. Beispielhaft kann die zweite Station 44 eine Verpackungsmaschine zum Verpacken der Objekte 12 in eine Umverpackung sein.

Der Förderer 32 ist in dem Beispiel in Fig. 8 ein Linearförderer. Beispielsweise handelt es sich um einen schienengeführten Linearförderer 32. Jedes Gebinde 22 ist mit dem Förderer 32 bewegungsgekoppelt. Jeder Objektträger 10 ist dafür mittels, insbesondere lösbaren, Formschlusses an der Schiene des Linearförderers 32 befestigt und wird von dem Förderer 32 entlang der Förderstrecke 34 bewegt. Es ist aber auch denkbar, dass der Förderer 32 ein Förderband 32 oder eine Magnetschwebebahn 32 ist. Der Förderer 32 bewirkt somit eine Bewegung 38 jedes Gebindes 22 entlang der Förderstrecke 34.

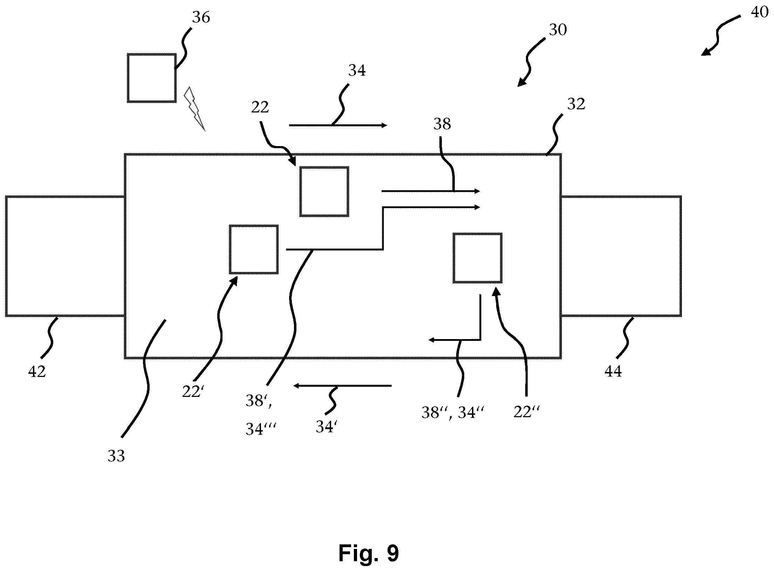

Fig. 9 zeigt eine Draufsicht einer dritten Ausführungsform des Transportsystems 30. Das Transportsystem 30 in Fig. 9 weist eine Vielzahl der Gebinde 22, 22', 22‴ auf, die der Ausführungsform aus Fig. 4 entsprechen und einen Förderer 32 zum Fördern der Gebinde 22 auf.

Die Förderstrecke (dargestellt mittels der Richtungspfeile 34, 34`) verläuft gradlinig zwischen einer ersten Station 42 und einer zweiten Station 44 der Verarbeitungsstraße 40. Dabei verläuft die Förderstrecke in einem ersten Abschnitt entlang der Richtung 34 von der ersten Station 42 zu der zweiten Station 44; und in einem zweiten Abschnitt entlang der Richtung 34' von der zweiten Station 44 zu der ersten Station 42.

Die erste Station 42 und die zweite Station 44 können, wie bereits bei der Ausführungsform der Fig. 8 gezeigt, Handhabungseinrichtungen oder Verarbeitungsstationen sein.

Der Förderer 32 ist im vorliegenden Beispiel ein Planarförderer 32. Der Planarförderer 32 stellt eine Bewegungsführung der Gebinde 22, 22`, 22" auf einer zweidimensionalen Transportfläche 33 breit. Die Bewegungsführung besteht aus den einzelnen Bewegungen (38, 38`, 38") der Gebinde 22, 22`, 22'". Jede Bewegung kann zumindest abschnittsweise entlang der Förderstrecke 34, 34' verlaufen. Des Weiteren kann, wie in Fig. 9 beispielhaft anhand der Bewegung 38" gezeigt, die Bewegung 38" auch abschnittsweise abweichend von der Förderstrecke 34 oder 34` verlaufen, sodass sich eine Förderstrecke 34" ergibt, die sich aus den abschnittsweise definierten Einzelbewegungen ergibt. Das ist beispielhaft auch anhand der Bewegung 38' gezeigt. Insbesondere kann eine Bewegungsgeschwindigkeit des Gebindes 22' entlang der Bewegung 38` variieren, um ein Überholen des Gebindes 22 durch das Gebinde 22' zu ermöglichen, sodass sich eine Förderstrecke 34‴ ergibt. Mit anderen Worten kann die Bewegungsführung der Gebinde 22, 22`, 22" mittels des Planarförderers 32 flexibel entlang veränderlicher Förderstrecken erfolgen.

Die Transportfläche 33 kann eine Magnetschwebefläche 33 sein. Die Magnetschwebefläche 33 ist rechteckig ausgestaltet. Die Magnetschwebefläche 33 kann eine Vielzahl von Kachelelementen aufweisen, die als Antrieb dienen. Die Kachelelemente sind dazu eingerichtet, eingespeiste Energie in ein geregeltes, elektromagnetisches Feld umzuwandeln, mit dem die Objektträger 10 der Gebinde 22, 22`, 22" bewegt werden können.

Die Kachelelemente sind aneinander anliegend angeordnet und bilden die die Magnetschwebefläche 33 aus. Denkbar sind aber auch andere Formen der Magnetschwebefläche 33. Beispielsweise kann die Magnetschwebefläche 33 quadratisch, L-förmig oder ringförmig ausgestaltet sein.

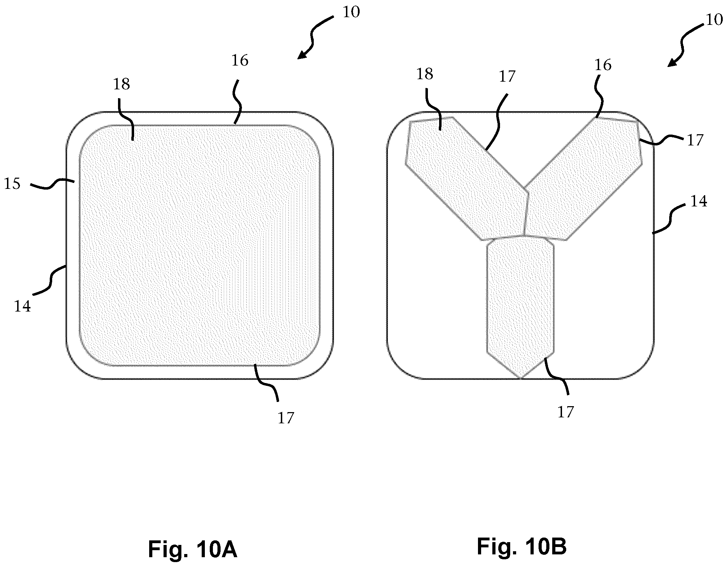

Die Figuren 10A und 10B zeigen verschiedene Ausführungsbeispiele der Haftstruktur.

Fig. 10A zeigt ein erstes Ausführungsbeispiel der Haftstruktur 16. Die Haftstruktur 16 weist ein Formelement 17 auf, das eine Form der Haftstruktur 16 und somit auch der Auflagefläche 18 definiert. Die Haftstruktur 16 ist in Bezug auf die Form entsprechend der Trägerplatte 14 ausgestaltet. Die Haftstruktur 16 ist somit quadratisch und flächig ausgestaltet. Die Haftstruktur 16 stellt somit eine universelle Aufnahme für Objekte mit unterschiedlichen Formen bereit.

In dem Ausführungsbeispiel der Fig. 10A ist zwischen der Haftstruktur 16 und der Trägerplatte 14 ein umlaufender Rand 15 angeordnet. Der Rand 15 kann dazu eingerichtet sein, mit einem Förderer eines Transportsystems koppelbar zu sein. Die Haftstruktur 16 kann die Trägerplatte 14 aber auch vollständig bedenken, sodass eine möglichst große Auflagefläche 18 bereitgestellt wird.

In Fig. 10B ist ein zweites Ausführungsbeispiel der Haftstruktur 16 gezeigt. Die Haftstruktur 16 bedeckt die Trägerplatte 14 nur teilweise. Die Haftstruktur 16 weist drei Formelemente 17 auf, die eine Form der Haftstruktur 16 definieren. Es versteht sich von selbst, dass die Haftstruktur auch andere Mehrzahlen der Formelemente 17 aufweisen kann.

Die Formelemente 17 sind streifenförmig ausgestaltet. Die Formelemente 17 sind sternförmig angeordnet und treffen sich mit einem Abschnitt in der Mitte der Trägerplatte 14. Die Haftstruktur 16 ist dazu eingerichtet, vorzugsweise Objekte an dem Objektträger 10 anzuhaften, die in Bereichen auf der Haftstruktur 16 aufliegen, in denen sich die Formelemente 17 erstrecken. Es versteht sich von selbst, dass es sich hierbei nur um ein Beispiel handelt und auch weitere Formen der Formelemente 17 möglich sind. Insbesondere kann die Haftstruktur 16 objektformnah ausgestaltet sein.

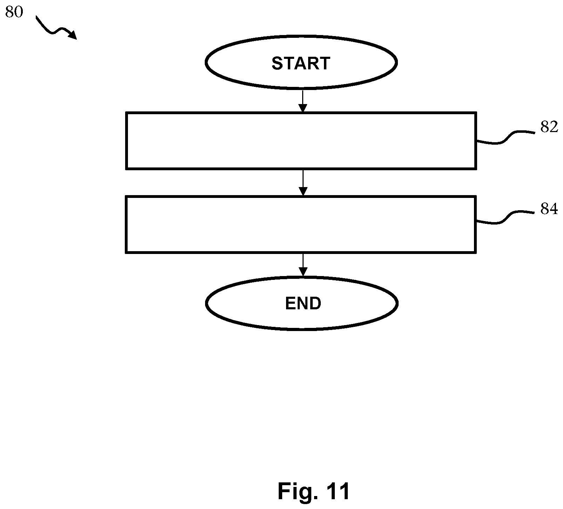

Fig. 11 zeigt eine Ausführungsform eines Verfahrens in seiner Gesamtheit mit der Bezugsziffer 80 bezeichnet. Das Verfahren 80 dient zum Transportieren einer Vielzahl von Objekten 10, insbesondere kosmetischer oder pharmazeutischer Objekte 10, mittels zumindest eines Objektträgers 10. Der Objektträger 10 weist eine Trägerplatte 14 und eine Haftstruktur 16, die auf einer Oberfläche der Trägerplatte 14 angeordnet ist, auf. Die Haftstruktur 16 bildet eine Auflagefläche 18 zum Tragen und Anhaften.

In einem ersten Schritt 82 des Verfahrens 80 wird der zumindest eine Objektträger 10 bereitgestellt.

In einem zweiten Schritt 84 des Verfahrens 80 wird zumindest eines der Objekte 12 mittels des zumindest einen Objektträgers 10, insbesondere von einem Startpunkt zu einem Zielpunkt, transportiert.

Des Weiteren umfasst die vorliegende Offenbarung Ausführungsformen entsprechend der folgenden Klauseln:
Klausel 1. Objektträger (10) zum Transportieren zumindest eines Objekts (12), insbesondere eines kosmetischen oder pharmazeutischen Objekts (12), wobei der Objektträger (10) eine Trägerplatte (14) und eine Haftstruktur (16), die auf einer Oberfläche der Trägerplatte (14) angeordnet ist, aufweist, wobei die Haftstruktur (16) eine Auflage-fläche (18) zum Tragen und Anhaften bildet.
Klausel 2. Objektträger (10) nach Klausel 1, wobei ein Fixieren einer Position des Objekts (12) auf der Auflagefläche (18) ausschließlich durch Kraftschluss bereitgestellt wird.
Klausel 3. Objektträger (10) nach Klausel 1 oder 2, wobei die Haftstruktur (16) eingerichtet ist, wenn das zumindest eine Objekt (12) von der Auflagefläche (18) getragen wird, van-der-Waals-Kräfte bereitzustellen, die zwischen der Haftstruktur (16) und dem zumindest einen Objekt (12) wirken.
Klausel 4. Objektträger (10) nach einer der Klauseln 1 bis 3, wobei die Haftstruktur (16) des Weiteren eingerichtet ist, Adhäsionskräfte bereitzustellen, die zwischen der Haftstruktur (16) und dem zumindest einen Objekt (12) wirken, wobei die Adhäsionskräfte von einer Klebeverbindung bereitgestellt werden.
Klausel 5. Objektträger (10) nach Klausel 1 oder 2, wobei die Haftstruktur (16) des Weiteren eingerichtet ist, van-der-Waals-Kräfte und/oder Adhäsionskräfte bereitzustellen, die zwischen der Haftstruktur (16) und zumindest einem Adapter (20) wirken, wenn der zumindest eine Adapter (20) von der Auflagefläche (18) getragen wird, wobei der Adapter (20) dazu eingerichtet ist, das Objekt (12), insbesondere formschlüssig, aufzunehmen.
Klausel 6. Objektträger (10) nach einer der Klauseln 3 bis 5, wobei die van-der-Waals-Kräfte in einem Bereich von 0,2 bis 25 N pro cm2, bevorzugt 0,2 bis 6 N pro cm2, liegen.
Klausel 7. Objektträger (10) nach einer der Klauseln 1 bis 6, wobei die Haftstruktur (16) eine Vielzahl von Vorsprüngen aufweist.
Klausel 8. Objektträger (10) nach Klausel 7, wobei jeder Vorsprung eine Stirnfläche auf-weist, die von der Trägerplatte (14) abgewandt ist, wobei die Vorsprünge mit den Stirnflächen eine gemeinsame Ebene definieren, die die Auflagefläche (18) bildet.
Klausel 9. Objektträger (10) nach Klausel 8, wobei die Stirnflächen eine strukturierte Oberfläche aufweisen, die dazu eingerichtet ist, eine reversible Adhäsion, insbesondere die van-der-Waals-Kräfte, bereitzustellen.
Klausel 10. Objektträger (10) nach Klausel 4, wobei die Adhäsionskräfte der Klebeverbindung in einem Bereich von 2 bis 30 N pro cm2, bevorzugt 2 bis 15 N pro cm2, besonders bevorzugt 2 bis 6 N pro cm2, liegen.
Klausel 11. Objektträger (10) nach einer der Klauseln 1 bis 10, wobei die Auflagefläche (18) eben ausgestaltet ist.
Klausel 12. Objektträger (10) nach einer der Klauseln 1 bis 11, wobei der Objektträger (10) zumindest einen Permanentmagneten aufweist, und dazu eingerichtet ist, unter Einwirkung eines Magnetfeldes in einen Schwebezustand versetzt und bewegt zu werden.
Klausel 13. Objektträger (10) nach einer der Klauseln 1 bis 12, wobei der Objektträger (10) dazu eingerichtet ist, mit einem Förderer (32), insbesondere einem Schienen basierten Linearförderer, koppelbar zu sein.
Klausel 14. Gebinde (22) aufweisend den Objektträger (10) nach einer der Klauseln 1 bis 13 und zumindest ein Objekt (12), insbesondere ein kosmetisches oder pharmazeutisches Objekt (12), das von der Auflagefläche (18) des Objektträgers (10) getragen wird und an dieser anhaftet.
Klausel 15. Gebinde (24) aufweisend den Objektträger (10) nach einer der Klauseln 1 bis 13; zumindest ein Objekt (12), insbesondere ein kosmetisches oder pharmazeutisches Objekt (12); und zumindest einen Adapter (20), der von der Auflagefläche (18) des Objektträgers (10) getragen wird und an dieser anhaftet, wobei der Adapter (20) das Objekt (12), insbesondere formschlüssig, aufnimmt.
Klausel 16. Transportsystem (30) mit zumindest einem Objektträger (10) nach einer der Klauseln 1 bis 13 oder mit zumindest einem Gebinde (22, 24) nach einer der Klauseln 14 oder 15 und einem Förderer (32) zum Fördern des zumindest einen Objektträgers (10) oder des zumindest einen Gebindes (22, 24) in einer Verarbeitungsstraße (40).
Klausel 17. Transportsystem (30) nach Klausel 16, wobei das Transportsystem (30) des Weiteren zumindest eine Förderstrecke (34) aufweist, entlang der der zumindest eine Objektträger (10), insbesondere automatisiert, bewegt werden kann.
Klausel 18. Transportsystem (30) nach Klausel 16 oder 17, wobei der der Förderer (32) ein Linearförderer oder ein Planarförderer ist.
Klausel 19. Transportsystem (30) nach einer der Klauseln 16 bis 18, wobei das Transportsystem (30) des Weiteren eine Steuereinheit (36) aufweist, die dazu eingerichtet ist, eine Bewegung jedes Objektträgers (10) derart zu steuern, dass das Anhaften der Objekte an der Auflagefläche (18) gelöst wird, insbesondere wobei die Bewegung eine Rotationsbewegung des Objektträgers (10) ist.
Klausel 20. Verfahren (80) zum Transportieren einer Vielzahl von Objekten (10), insbesondere kosmetischer oder pharmazeutischer Objekte (10), mittels zumindest eines Objektträgers (10), wobei der Objektträger (10) eine Trägerplatte (14) und eine Haftstruktur (16), die auf einer Oberfläche der Trägerplatte (14) angeordnet ist, aufweist, wobei die Haftstruktur (16) eine Auflagefläche (18) zum Tragen und Anhaften bildet, wobei das Verfahren (80) die folgenden Schritte aufweist:
   - Bereitstellen (82) des zumindest einen Objektträgers (10); und
   - Transportieren (84) zumindest eines der Objekte (12) mittels des zumindest einen Objektträgers (10), insbesondere von einem Startpunkt zu einem Zielpunkt.
Klausel 21. Verfahren (80) nach Klausel 20, wobei jeder Objektträger (10) zumindest ein Objekt (12) auf der Auflagefläche (18) angehaftet trägt.
Klausel 22. Verfahren (80) nach Klausel 20, wobei jeder Objektträger (10) zumindest einen Adapter (20) auf der Auflagefläche (18) angehaftet trägt, wobei der Adapter (20) ein Objekt (12), insbesondere formschlüssig, aufnimmt.
Klausel 23. Verfahren (80) nach einer der Klauseln 20 bis 22, wobei das Verfahren (80) in dem Transportsystems (30) nach einer der Klauseln 13 bis 15 durchgeführt wird, wobei der Schritt des Breitstellens (82) ein Bereitstellen in dem Förderer (32) ist und der Schritt des Transportierens (84) mittels des Förderers (32) durchgeführt wird.
Klausel 24. Verfahren (80) nach einer der Klauseln 20 bis 23, wobei das Verfahren (80) des Weiteren einen Schritt des Bewegens (86) des zumindest einen Objektträgers (10) aufweist, wobei das Bewegen jedes Objektträgers (10) derart gesteuert wird, dass das Anhaften der Objekte (12) an der Auflagefläche (18) gelöst wird, insbesondere wobei die Bewegung eine Rotationsbewegung des Objektträgers (10) ist.

## Patentansprüche

1. Objektträger (10) zum Transportieren zumindest eines Objekts (12), insbesondere eines kosmetischen oder pharmazeutischen Objekts (12), wobei der Objektträger (10) eine Trägerplatte (14) und eine Haftstruktur (16), die auf einer Oberfläche der Trägerplatte (14) angeordnet ist, aufweist, wobei die Haftstruktur (16) eine Auflagefläche (18) zum Tragen und Anhaften bildet.

2. Objektträger (10) nach Anspruch 1, wobei ein Fixieren einer Position des Objekts (12) auf der Auflagefläche (18) ausschließlich durch Kraftschluss bereitgestellt wird.

3. Objektträger (10) nach Anspruch 1 oder 2, wobei die Haftstruktur (16) eingerichtet ist, wenn das zumindest eine Objekt (12) von der Auflagefläche (18) getragen wird, van-der-Waals-Kräfte bereitzustellen, die zwischen der Haftstruktur (16) und dem zumindest einen Objekt (12) wirken.

4. Objektträger (10) nach einem der Ansprüche 1 bis 3, wobei die Haftstruktur (16) des Weiteren eingerichtet ist, Adhäsionskräfte bereitzustellen, die zwischen der Haftstruktur (16) und dem zumindest einen Objekt (12) wirken, wobei die Adhäsionskräfte von einer Klebeverbindung bereitgestellt werden.

5. Objektträger (10) nach Anspruch 1 oder 2, wobei die Haftstruktur (16) des Weiteren eingerichtet ist, van-der-Waals-Kräfte und/oder Adhäsionskräfte bereitzustellen, die zwischen der Haftstruktur (16) und zumindest einem Adapter (20) wirken, wenn der zumindest eine Adapter (20) von der Auflagefläche (18) getragen wird, wobei der Adapter (20) dazu eingerichtet ist, das Objekt (12), insbesondere formschlüssig, aufzunehmen.

6. Objektträger (10) nach einem der Ansprüche 1 bis 5, wobei die Haftstruktur (16) eine Vielzahl von Vorsprüngen aufweist.

7. Objektträger (10) nach Anspruch 6, wobei jeder Vorsprung eine Stirnfläche aufweist, die von der Trägerplatte (14) abgewandt ist, wobei die Vorsprünge mit den Stirnflächen eine gemeinsame Ebene definieren, die die Auflagefläche (18) bildet.

8. Objektträger (10) nach Anspruch 7, wobei die Stirnflächen eine strukturierte Oberfläche aufweisen, die dazu eingerichtet ist, eine reversible Adhäsion, insbesondere die van-der-Waals-Kräfte, bereitzustellen.

9. Objektträger (10) nach einem der Ansprüche 1 bis 8, wobei die Auflagefläche (18) eben ausgestaltet ist.

10. Objektträger (10) nach einem der Ansprüche 1 bis 9, wobei der Objektträger (10) zumindest einen Permanentmagneten aufweist, und dazu eingerichtet ist, unter Einwirkung eines Magnetfeldes in einen Schwebezustand versetzt und bewegt zu werden.

11. Objektträger (10) nach einem der Ansprüche 1 bis 10, wobei der Objektträger (10) dazu eingerichtet ist, mit einem Förderer (32), insbesondere einem Schienen basierten Linearförderer, koppelbar zu sein.

12. Gebinde (22) aufweisend den Objektträger (10) nach einem der Ansprüche 1 bis 11 und zumindest ein Objekt (12), insbesondere ein kosmetisches oder pharmazeutisches Objekt (12), das von der Auflagefläche (18) des Objektträgers (10) getragen wird und an dieser anhaftet.

13. Gebinde (24) aufweisend den Objektträger (10) nach einem der Ansprüche 1 bis 12; zumindest ein Objekt (12), insbesondere ein kosmetisches oder pharmazeutisches Objekt (12); und zumindest einen Adapter (20), der von der Auflagefläche (18) des Objektträgers (10) getragen wird und an dieser anhaftet, wobei der Adapter (20) das Objekt (12), insbesondere formschlüssig, aufnimmt.

14. Transportsystem (30) mit zumindest einem Objektträger (10) nach einem der Ansprüche 1 bis 11 oder mit zumindest einem Gebinde (22, 24) nach einem der Ansprüche 12 oder 13 und einem Förderer (32) zum Fördern des zumindest einen Objektträgers (10) oder des zumindest einen Gebindes (22, 24) in einer Verarbeitungsstraße (40).

15. Verfahren (80) zum Transportieren einer Vielzahl von Objekten (10), insbesondere kosmetischer oder pharmazeutischer Objekte (10), mittels zumindest eines Objektträgers (10), wobei der Objektträger (10) eine Trägerplatte (14) und eine Haftstruktur (16), die auf einer Oberfläche der Trägerplatte (14) angeordnet ist, aufweist, wobei die Haftstruktur (16) eine Auflagefläche (18) zum Tragen und Anhaften bildet, wobei das Verfahren (80) die folgenden Schritte aufweist:
- Bereitstellen (82) des zumindest einen Objektträgers (10); und
- Transportieren (84) zumindest eines der Objekte (12) mittels des zumindest einen Objektträgers (10), insbesondere von einem Startpunkt zu einem Zielpunkt.
